# EUROPÄISCHE PATENTSCHRIFT

(11) **EP 2 639 085 B1**
(45) Veröffentlichungstag und Bekanntmachung des Hinweises auf die Patenterteilung: **02.09.2015**
(21) Anmeldenummer: 13154878.6
(22) Anmeldetag: 12.02.2013
(51) Int. Cl.: B60C 23/04, B60C 11/16, B29D 30/00

(54) **Verfahren zum Verankern eines Containers für temperatursensible Elektronik im Laufstreifen eines Fahrzeugreifens**
Method for anchoring a container for temperature-sensitive electronics in the tread of a vehicle tyre
Procédé d'ancrage d'un conteneur pour un système électronique thermosensible dans la bande de roulement d'un pneu de véhicule

(30) Priorität: 16.03.2012 DE 102012102232
(43) Veröffentlichungstag der Anmeldung: 18.09.2013
(73) Patentinhaber: Continental Reifen Deutschland GmbH, 30165 Hannover (DE)
(72) Erfinder: Kendziorra, Norbert, 30827 Garbsen (DE); Kötter, Maik, 49733 Haren (Ems) (DE)
(74) Vertreter: Finger, Karsten

(56) Entgegenhaltungen:
- DE-A1- 10 206 882
- US-A1- 2004 134 578
- US-A1- 2008 303 674

## Beschreibung

Die Erfindung betrifft ein Verfahren zum Verankern eines Containers in einem Laufstreifen eines Fahrzeugluftreifens, wobei der Container ein mit einem Deckel verschließbarer Behälter ist und wobei man den Behälter in eine bereits vorhandene Aussparung einbringt. Die Erfindung betrifft ferner den Container und einen mit diesem Container versehenen Fahrzeugreifen.

Ein gattungsbildender Fahrzeugluftreifen, dessen Außenseite eine Ausnehmung aufweist, welche einen Container beinhaltend ein Schild mit einem drahtlosen Identifizierungscode aufweist, ist in der US 2008/0303674 A1 offengelegt.

Aus der DE 102 06 882 A1 ist ein Luftreifen bekannt, in dessen Mantel ein mehrteiliger Sensor mit elektrisch leitenden Verbindungen zur Erfassung von für die Sicherheit und den Fahrkomfort relevanter Messgrößen angeordnet ist.

Fahrzeugreifen mit Komponenten für eine Reifenzustandsgrößenerfassung, welche in den Laufstreifen dieses Fahrzeugluftreifens eingebracht sind, sind beispielsweise aus der DE 10 2004 044 954 A1 bekannt. Die Komponenten für die Zustandsgrößenerfassung und deren Speicherung und/ oder Übertragung sind in einem Container untergebracht, welcher inmitten eines Profilelementes des Laufstreifens angeordnet und vollständig von Gummimaterial des Laufstreifens umschlossen ist.

Problematisch ist das haltbare Einbringen dieses Containers in den Laufstreifen, um den Container auch im Betrieb des Fahrzeugreifens sicher im Laufstreifen zu positionieren.

Dabei ist es erforderlich, dass temperatursensible Komponenten für die Reifenzustandsgrößenerfassung und/ oder Komponenten für die Übermittlung und/ oder Speicherung dieser Daten nicht durch zu hohe Temperaturen während dieses Einbringens und Einbindens des Containers in den Laufstreifen beschädigt werden. Beim Vulkanisieren eines Reifenrohlings zu einem betriebsbereiten Reifen werden Temperaturen von 170° bis 220°C erreicht. Diese Temperaturen schädigen temperatursensible Elektronik.

Der Erfindung liegt somit die Aufgabe zugrunde, ein Verfahren zur Verfügung zu stellen, welches eine weitgehend belastungsresistente Einbindung eines Containers in den Laufstreifen ermöglicht, so dass die Gefahr eines Containerverlustes unter hohen Belastungen minimiert ist. Darüber hinaus soll es die Erfindung ermöglichen, temperatursensible Komponenten für die Reifenzustandsgrößenerfassung, -übertragung und/oder -speicherung im Container unterbringen zu können.

Gelöst wird die gestellte Aufgabe, indem der Container temperatursensible Elektronik zur Erfassung von Reifenzustandsgrößen beinhaltet, indem man den Behälter vor dem Einbringen in den Laufstreifen des bereits vulkanisierten Reifens mit einem Haftsystem beschichtet und unter Pressung des Gummimaterials in die vorhandenen Aussparung einbringt, wobei die vorhandene Aussparung dem Behälter in etwa komplementär ist und indem man anschließend das Haftsystem des in der Aussparung angeordneten Behälters durch Wärme, vorzugsweise bis maximal 120°C aktiviert, so dass eine Haftverbindung des Behälters mit dem Gummimaterial des Laufstreifens hergestellt wird.

Beim erfindungsgemäßen Verfahren wird ein verschließbarer Container verwendet, der mit der Elektronik bestückt in eine bereits vorhandene Aussparung des bereits heizgepressten Reifens eingesetzt wird. In einem weiteren Schritt wird dessen Haftsystem unter geringen Temperaturen aktiviert. Die zur Aktivierung des Haftsystems notwendige Temperatur liegt vorzugsweise bei maximal 120°C und ist für die temperatursensible Elektronik unschädlich. Der Container wird chemisch und physikalisch in den Laufstreifen eingebunden und ist in der Lage, auch hohen äußeren Belastungen standzuhalten. Die Erfindung ermöglicht außerdem eine nachträgliche und optionale Bestückung des Reifens mit einem Container. Der Container weist einen Deckel auf und ist damit wiederverschließbar, um die Elektronik oder Teile dieser aus dem Container entnehmen oder austauschen zu können.

In einer bevorzugten Ausführungsform der Erfindung wird der Container in einem Tauchverfahren mit dem Haftsystem beschichtet. Dabei kann derart vorgegangen werden, dass der Container in einen Primer getaucht, anschließend zwischengetrocknet, dann in das Haftsystem getaucht und schließlich getrocknet wird. Alternativ kann auch ein einschichtig aufzubringendes Haftsystem verwendet werden, in diesem Fall ist nur ein Tauchbad erforderlich. Im Rahmen eines Tauchverfahrens ist es ferner möglich, den Container komplett zu beschichten oder lediglich Teilbereiche des Containers zu beschichten.

Die zur Beschichtung vorgesehene(n) Flüssigkeit(en) kann bzw. können auch mittels eines Sprühverfahrens aufgebracht werden. Auch in diesem Fall schließt ein Trocknungsvorgang unter Zufuhr von Wärme, beispielsweise warmer Luft, an.

Um die chemische Haftung des in den Laufstreifen eingebrachten und mit dem Haftsystem beschichteten Containers durch Ausheizen bzw. Aktivieren des Haftsystems zu bewirken, sind verschiedene vorteilhafte und in der industriellen Fertigung von Reifen rationell einsetzbare Verfahren möglich.

Bei einem dieser Verfahren wird das Haftsystem auf dem Container durch Kontaktheizen aktiviert. Die Wärme wird von außen auf den Reifen übertragen. Möglich ist dies beispielsweise durch ein Abrollen des Reifens auf einem entsprechend erhitzten Untergrund.

Eine weitere, vorteilhafte Möglichkeit, das Haftsystem des Containers zu aktivieren, ist durch Induktionsheizen des Containers. Dieses Verfahren eignet sich für Container mit einem metallischen Körper.

Die Erfindung betrifft ferner einen Fahrzeugluftreifen mit einem Container, welcher gemäß dem vorgenannten erfindungsgemäßen Verfahren im Laufstreifen verankert ist.

Die Erfindung betrifft ferner die Verwendung eines Spikekörpers als Container. Hierdurch ist es ermöglicht, spikerelevante Messdaten zu ermitteln.

Weitere Merkmale, Vorteile und Einzelheiten der Erfindung werden anhand der schematischen Zeichnungen, die ein Ausführungsbeispiel darstellen, näher beschrieben.
Dabei zeigen die
- Fig. 1: eine dreidimensionale Ansicht eines Containers, dessen Bestandteile noch nicht zusammengesetzt sind;
- Fig. 2: einen Längsschnitt durch einen in den Laufstreifen eingesetzten Container der Fig. 1.

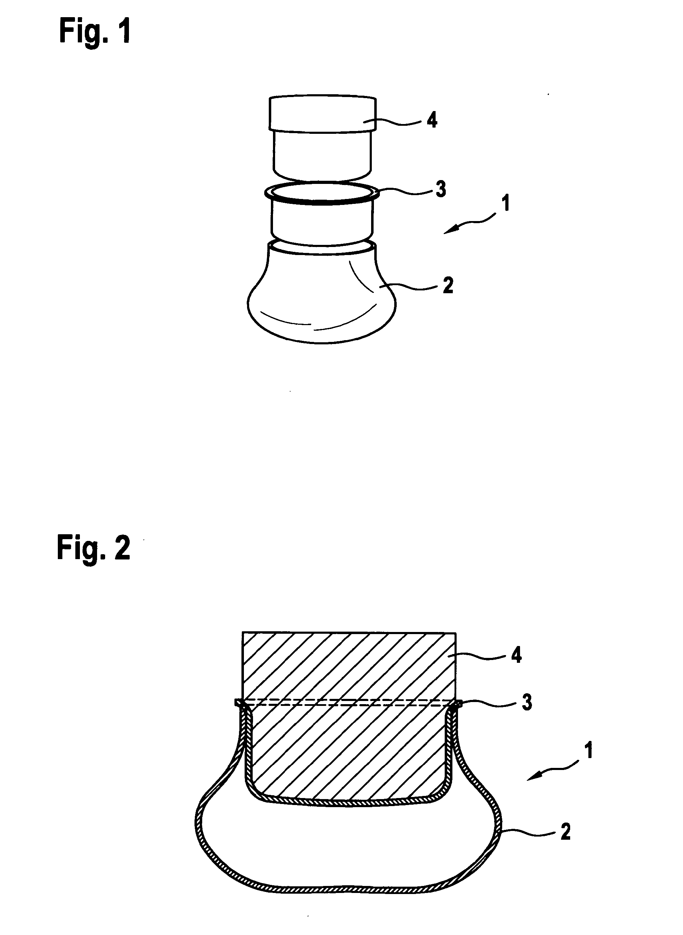

Die Fig. 1 zeigt eine dreidimensionale Ansicht eines Containers 1, dessen Bestandteile noch nicht zusammengesetzt sind. Die Bestandteile sind der Behälter 2, welcher mit einem Deckel 3 feuchtigkeitsdicht zu verschließen ist und ein Gummipropfen 4, welcher auf der Außenseite des Deckels 3 einzustecken ist. Der Container 1 dient dazu, temperatursensible Elektronik aufzunehmen und in einem Laufstreifen eines bereits vulkanisierten Fahrzeugreifens verankert zu werden. Mit der Elektronik können Reifenzustandsgrößen erfasst und übertragen und/oder gespeichert werden. Zum Verankern des Containers 1 in einem Laufstreifen eines Fahrzeugreifens geht man folgendermaßen vor: man beschichtet das Behältnis 2 vor dem Einbringen in den bereits vulkanisierten Laufstreifen mit einem Haftsystem und bringt den Behälter 2 unter Pressung des Gummimaterials in eine bereits vorhandene, dem Behälter 2 etwa komplementäre Aussparungen ein. Anschließend aktiviert man das Haftsystem des in der Aussparungen angeordneten Behälters 2 durch Wärme bis maximal 120°C, so dass eine Haftverbindung des Behälters 2 mit dem Gummimaterial des Laufstreifens hergestellt wird.

Die Fig. 2 zeigt einen Längsschnitt durch den in den Laufstreifen eingesetzten Container 1 der Fig. 1. Der Gummipropfen 4 verschließt die Aussparung im Laufstreifen derart, dass dieser mit der Oberfläche der Lauffläche fluchtet und dass diese feuchtigkeitsdicht ist.

### Bezugszeichenliste

- 1: Container
- 2: Behälter
- 3: Deckel
- 4: Gummipropfen

## Patentansprüche

1. Verfahren zum Verankern eines Containers (1) in einem Laufstreifen eines Fahrzeugluftreifens, wobei der Container (1) ein mit einem Deckel (3) verschließbarer Behälter (2) ist und wobei man den Behälter (2) in eine bereits vorhandene Aussparung einbringt,
**dadurch gekennzeichnet, dass**
• der Container (1) temperatursensible Elektronik zur Erfassung von Reifenzustandsgrößen beinhaltet,
• dass man den Behälter (2) vor dem Einbringen in den Laufstreifen mit einem Haftsystem beschichtet und unter Pressung des Gummimaterials in die vorhandene Aussparung einbringt, wobei die vorhandene Aussparung dem Behälter (2) in etwa komplementär ist
• und dass man anschließend das Haftsystem des in der Aussparung angeordneten Behälters (2) durch Wärme aktiviert, so dass eine Haftverbindung des Behälters (2) mit dem Gummimaterial des Laufstreifens hergestellt wird.

2. Verfahren nach Anspruch 1, **dadurch gekennzeichnet, dass** man das Haftsystem mit Wärme bis maximal 120°C aktiviert.

3. Verfahren nach Anspruch 1 oder 2, **dadurch gekennzeichnet, dass** man das Haftsystem durch Eintauchen des Behälters (2) aufbringt und man den Behälter (2) anschließend trocknet.

4. Verfahren nach Anspruch 1 oder 2, **dadurch gekennzeichnet, dass** man den Behälter (2) mit dem Haftsystem besprüht und anschließend trocknet.

5. Verfahren nach einem der Ansprüche 1 bis 4, **dadurch gekennzeichnet, dass** man das auf den Behälter (2) aufgebrachte Haftsystem durch Kontaktheizen aktiviert.

6. Verfahren nach Anspruch 5, **dadurch gekennzeichnet, dass** man den Reifen auf einem erhitzten Untergrund abrollt.

7. Verfahren nach einem der Ansprüche 1 bis 5, **dadurch gekennzeichnet, dass** man das auf den Behälter (2) aufgebrachte Haftsystem durch Heißluft, Heißdampf oder Heißwasser aktiviert.

8. Verfahren nach einem der Ansprüche 1 bis 5, **dadurch gekennzeichnet, dass** man das auf den Behälter (2) aufgebrachte Haftsystem durch ein Induktionsheizen aktiviert.

9. Fahrzeugluftreifen mit einem Container (1), welcher gemäß dem Verfahren nach einem oder mehreren der Ansprüche 1 bis 8 verankert ist.

10. Verwendung eines Spikekörpers als Container (1) gemäß einem oder mehreren der Ansprüche 1 bis 8.

## Claims

1. Method for anchoring a container (1) in a tread of a pneumatic vehicle tyre, the container (1) being a receptacle (2) that can be closed with a cover (3), and the receptacle (2) being introduced into an already existing recess,
**characterized in that**
• the container (1) contains temperature-sensitive electronics for detecting variables concerning the state of the tyre,
• before being introduced into the tread, the container (2) is coated with an adhesive system and is introduced into the existing recess by pressing the rubber material, the existing recess being approximately complementary to the receptacle (2)
• and subsequently activating the adhesive system of the receptacle (2) arranged in the recess by heat, so that an adhesive bond of the receptacle (2) with the rubber material of the tread is established.

2. Method according to Claim 1, **characterized in that** the adhesive system is activated with heat up to a maximum of 120°C.

3. Method according to Claim 1 or 2, **characterized in that** the adhesive system is applied by immersing the receptacle (2) and the receptacle (2) is subsequently dried.

4. Method according to Claim 1 or 2, **characterized in that** the receptacle (2) is sprayed with the adhesive system and subsequently dried.

5. Method according to one of Claims 1 to 4, **characterized in that** the adhesive system applied to the receptacle (2) is activated by contact heating.

6. Method according to Claim 5, **characterized in that** the tyre is rolled on a heated underlying surface.

7. Method according to one of Claims 1 to 5, **characterized in that** the adhesive system applied to the receptacle (2) is activated by hot air, hot steam or hot water.

8. Method according to one of Claims 1 to 5, **characterized in that** the adhesive system applied to the receptacle (2) is activated by induction heating.

9. Pneumatic vehicle tyre with a container (1) that has been anchored by the method according to one or more of Claims 1 to 8.

10. Use of a spike body as a container (1) according to one or more of Claims 1 to 8.

## Revendications

1. Procédé pour ancrer un conteneur (1) dans la bande de roulement d'un bandage pneumatique pour roue de véhicule, le conteneur (1) étant un récipient (2) apte à être fermé par un couvercle (3) et le récipient (2) étant placé dans une découpe existante,
**caractérisé en ce que**
le conteneur (1) contient une électronique sensible à la température, qui saisit des grandeurs d'état du bandage de roue,
**en ce qu'**avant d'être placé dans la bande de roulement, le récipient (2) est revêtu d'un système adhésif et est placé dans la découpe existante en repoussant le matériau de caoutchouc, la découpe existante étant sensiblement complémentaire au récipient (2) et
**en ce qu'**ensuite, on active le système adhésif du récipient (2) disposé dans la découpe par application de chaleur de manière à établir une liaison adhésive entre le récipient (2) et le matériau de caoutchouc de la bande de roulement.

2. Procédé selon la revendication 1, **caractérisé en ce que** l'on active le système adhésif à une chaleur d'au plus 120°C.

3. Procédé selon les revendications 1 ou 2, **caractérisé en ce que** l'on applique le système adhésif en y immergeant le récipient (2) et en séchant ensuite le récipient (2).

4. Procédé selon les revendications 1 ou 2, **caractérisé en ce que** l'on pulvérise le système adhésif sur le récipient (2) avant de le sécher.

5. Procédé selon l'une des revendications 1 à 4, **caractérisé en ce que** l'on active le système adhésif appliqué sur le récipient (2) par chauffage par contact.

6. Procédé selon la revendication 5, **caractérisé en ce que** l'on fait rouler le bandage de roue sur un soubassement chauffé.

7. Procédé selon l'une des revendications 1 à 5, **caractérisé en ce que** l'on active le système adhésif appliqué sur le récipient (2) par de l'air chaud, de la vapeur chaude ou de l'eau chaude.

8. Procédé selon l'une des revendications 1 à 5, **caractérisé en ce que** l'on active le système adhésif appliqué sur le récipient (2) par chauffage par induction.

9. Bandage pneumatique pour roue de véhicule doté d'un conteneur (1) ancré par recours au procédé selon l'une ou plusieurs des revendications 1 à 8.

10. Utilisation d'un corps de crampon comme conteneur (1) selon l'une ou plusieurs des revendications 1 à 8.
